# EUROPÄISCHE PATENTSCHRIFT

(11) **EP 1 241 366 B1**
(45) Veröffentlichungstag und Bekanntmachung des Hinweises auf die Patenterteilung: **01.06.2005**
(21) Anmeldenummer: 02004583.7
(22) Anmeldetag: 28.02.2002
(51) Int. Cl.: F16C 1/22

(54) **Vorrichtung zur selbsttätigen Längenkorrektur von Betätigungen**
Device for compensating automatically variations in the length of push-pull cable
Dispositif pour compenser automatiquement les variations de longueur d'un câble de commande à distance

(30) Priorität: 14.03.2001 DE 10112059
(43) Veröffentlichungstag der Anmeldung: 18.09.2002
(73) Patentinhaber: Küster Automotive Control Systems GmbH, 35630 Ehringshausen (DE)
(72) Erfinder: Blücher, Martin, 35625 Hüttenberg- Weidenhausen (DE)
(74) Vertreter: Müller, Eckhard, Dr.

(56) Entgegenhaltungen:
- DE-A- 4 109 887
- DE-A- 19 618 422
- DE-C- 4 024 062
- US-A- 4 957 017
- US-A- 5 139 126

## Beschreibung

Die Erfindung betrifft eine Vorrichtung zur selbsttätigen Längenkorrektur von Betätigungen, insbesondere von Seilzügen, zur Nachstellung von Betätigungszügen oder Bremsseilzügen oder dergleichen von Kraftfahrzeugen, mit einer eine Aufnahme oder dergleichen aufweisenden Hülse und einer in der Aufnahme verschiebbar geführten Zahnstange, Raststange oder dergleichen, wobei die Hülse eine Anlenkung für einen Geber, zum Beispiel einen Hebel, einen Bremshebel oder dergleichen aufweist und die Zahnstange oder dergleichen über einen Seilzug mit einem Nehmer gekoppelt ist, und bei einer Aktivierung des Gebers die Hülse und die Zahnstange oder dergleichen mittels eines Sperrsegmente aufweisenden Gesperres koppelbar sind und bei einer Deaktivierung des Gebers die bevorzugt mit einer Vorspannung beaufschlagte Zahnstange zur Kompensation etwaiger im System vorhandener Lose bezüglich der Hülse in Richtung einer Verkürzung oder Verlängerung der Vorrichtung verschiebbar ist, wobei zwischen dem Gesperre und einem ortsfesten Anschlag auf der Zahnstange eine verschiebbare Hülse geführt ist, welche über eine Deaktivierung des Gebers das Gesperre in eine Öffnungsstellung überführt.

Eine derartige Vorrichtung ist bereits aus der DE-A-196 18 422 bekannt und in Figur 5 der vorliegenden Anmeldung bildlich dargestellt. Diese bekannte Einstellvorrichtung weist einen Bügel auf, welcher an dem Geber, beispielsweise dem Bremshebel beziehungsweise Handbremshebel angelenkt ist. Die Anlenkung ist mit den Bezugszeichen 2 bezeichnet. Der Bügel 1 ist beispielsweise in eine Hülse 3 mit einer entsprechenden Aussparung 4 eingesetzt. Die Hülse 3 weist eine Konuskammer 5 auf, in welcher Sperrsegmente 6 gleitend geführt sind. Die Sperrsegmente 6 sind mittels einer Druckfeder 7, welche sich an einer Schulter 8 der Hülse 3 abstützt, in Sperrstellung bezüglich einer Zahnstange 9 gedrückt. Die Sperrsegmente weisen Rastzähne 10, welche in Sperrstellung der Sperrsegmente 6 in Eingriff mit der Gegenzahnung 11 der Zahnstange 9 gelangen. Die Zahnstange 9 ist mit ihrem freien Ende mit dem Seilzug 12, beispielsweise über einen Preßstück 13 beziehungsweise eine Verschraubung oder dergleichen, verbunden. Zwischen dem Preßstück 13 und einem Sperrstück 14 ist eine Druckfeder 15 eingesetzt. Das Sperrstück 14 stützt sich seinerseits an einem fest mit dem Seil 12 verbundenen Nippel 16 ab. Das Sperrstück 14 ist dabei so ausgestaltet, dass es durch eine Drehbewegung über den Nippel 16 gleiten kann. Diese Maßnahme ist von Bedeutung für den Anlieferungszustand der Nachstell- beziehungsweise Einstellvorrichtung an das Band des Kraftfahrzeugherstellers. In diesem Anlieferungszustand ist die Vorrichtung auf maximale Länge ausgezogen, um das Montieren einends mit dem Betätigungshebel und anderenends mit dem Seilzug 12 an der Bremseinrichtung in einfacher Weise zu ermöglichen. In diesem Fall ist die Feder 15 im wesentlichen auf Kleinstmaß zusammengedrückt, wobei das Sperrstück 14 in Anlagestellung mit dem Nippel 16 steht. Nachdem die Nachstelleinrichtung montiert ist, wird das Sperrstück 14 gedreht, so dass es außer Eingriff mit dem Nippel 16 gelangt. Dabei entspannt sich die Feder 15, bis das Sperrstück 14 an einen fahrzeugseitigen Anschlag 19 gelangt. Danach verschiebt die Feder die Raststange 9 in die Hülse 3, bis alle Lose auf der Nehmerseite, d. h. auf dem Abschnitt zwischen Nachstelleinrichtung und Bremsanlage aus dem Seilzug 12 ausgenommen sind. Dabei rasten die Rastzähne 10 der Sperrsegmente 6 über die Gegenzahnung 11 der Zahnstange 9, indem das Sperrsegment 6 um ein gewisses Maß in der Konuskammer 5 in Richtung des Betätigungshebels verschoben wird. Weiterhin ist eine Hülse 17 vorgesehen, welche mit ihrem stirnseitigen Ende 18 gegen die Sperrsegmente 6 gelangt, um diese außer Eingriff mit der Zahnstange 9, also in eine Öffnungsstellung zu bringen. Zur besseren Handhabung kann die Hülse 17 eine Rändelung 20 am freien Ende aufweisen. Dabei ist die Hülse 17 als in der Hülse 3 frei verschiebliches Bauteil ausgebildet, welche der Zahnstange 9 aufsitzt. Die Hülse 17 wirkt mit ihrem freien Endabschnitt mit einem fahrzeugseitigen ortsfesten Anschlag 21 zusammen, an dem sich die Hülse 17 mit der rändelseitigen Stirnseite bei Ablegen beziehungsweise Deaktivierung des Betätigungshebels abstützt, so dass stets ein Öffnen des Gesperres beziehungsweise der Sperrsegmente 6 in diesem Zustand des deaktivierten Gebers beziehungsweise Betätigungshebels herbeigeführt ist. In diesem Zustand wird die Zahnstange 9 durch die Feder 12 in die Hülse 3 hineingeschoben, um den Seilzug zu verkürzen. Andererseits kann in diesem Zustand infolge der an den Bremsen befindlichen Rückstellfedern eine sozusagen virtuelle Längung des Seilzuges 12 im deaktivierten Zustand des Betätigungshebels erfolgen. Sobald der Hebel wieder aktiviert beziehungsweise angezogen . wird, gelangen bei losefreiem Seilsystem die Rastsegmente 6 erneut in die Sperrstellung, d. h. in Formschluß mit der Zahnstange 9.

Ein Vorteil dieser Ausführungsform nach dem Stand der Technik besteht u. a. auch darin, dass das System im nicht betätigten Zustand offen ist, d. h. nicht nur verkürzbar, sondern auch verlängerbar ist. Wenn bei betätigter Geberseite beispielsweise die Nehmerseite infolge Frosteinwirkung blockiert ist, erfolgt nach Überführung des Betätigungshebels der Handbremse beziehungsweise des Gebers in seine Ausgangsstellung beziehungsweise Ablegen des Handbremsbetätigungshebels beim späteren Lösen der Blockade der Nehmerseite auch eine Einstellung in entgegengesetzter Richtung im Hinblick auf eine Verlängerung des Seilzuges. Bei manchen bekannten Nachstelleinrichtungen führt ein Blockieren der Nehmerseite dazu, dass die Nachstelleinrichtung irreversibel das Seilsystem zusätzlich zu verkürzten trachtet, mit der Folge, dass die Nachstellvorrichtung erst von Hand wieder in den Ausgangszustand überführt werden muß. Dies ist besonders nachteilig, da der Fahrzeugführer üblicherweise nicht feststellen kann, ob in kälteren Jahreszeiten das Bremssystem zugefroren ist oder nicht. Diese Vorrichtung nach der DE-A-196 18 422 , hat sich im allgemeinen recht gut in der Praxis bewährt. Insbesondere wird der Anschlag 21 in Relation zu dem freien Ende der Hülse 17 so eingestellt, dass ein möglichst geringer Leerhub des Systems und damit ein geringer Leerhub beim Anheben des Betätigungshebels, insbesondere des Handbremshebels, erzeugt wird.

Seitens der Automobilhersteller wird jedoch ein Leerhub von nicht mehr als 2 mm verlangt. Der Anschlag zum Entriegeln der Nachstellvorrichtung ist im Allgemeinen ein separates Bauteil, welches bei der Montage zur Einstellung des maximalen Leerhubes exakt in einer vorgegebenen Position angeordnet werden muß. Dies ist sowohl mit einem erheblichen herstellungstechnischen Aufwand als auch mit einem montagetechnischen Aufwand verbunden.

Demgegenüber liegt der vorliegenden Erfindung die Aufgabe zugrunde, eine Vorrichtung mit den eingangs genannten Merkmalen dahingehend weiterzubilden, dass bei einer geringen Anzahl von Bauteilen eine einfache Montage, eine universelle Einsetzbarkeit sowie eine sichere Einstellung des von den Automobilherstellern geforderten Leerhubes ermöglicht ist.

Diese Aufgabe wird nach der Erfindung bei der Vorrichtung mit den eingangs genannten Merkmalen im wesentlichen dadurch gelöst, dass der verschiebbaren Hülse ein in Längserstreckung der Hülse verstellbarer sowie feststellbarer Gegenanschlag, zum Beispiel ein Ring aufsitzt, der mit dem Anschlag zusammenwirkt.

Bei der Vormontage der Vorrichtung beziehungsweise des Moduls bei dem Lieferanten befindet sich die Vorrichtung in einer verriegelten Stellung, wobei sich die Zahnsegmente der Sperrsegmente in Eingriff mit der Zahnstange befinden. In dieser Stellung wird die Hülse beziehungsweise Buchse mittels einer Linearverstelleinheit soweit verschoben, bis das stirnseitige Ende der Hülse oder Buchse an den Sperrsegmenten anliegt. Danach erfolgt eine definierte Axialverschiebung der Hülse oder Buchse um nicht mehr als den jeweiligen, vom Automobilhersteller geforderten Leerhub, beispielsweise 2 mm. Damit ist ein Toleranzausgleich realisiert. Anschließend wird bei einer in Anlagestellung an der Hülse beziehungsweise Buchse befindlichen Linearverstelleinheit eine Verschiebung des Ringes auf der Hülse oder Buchse an den fahrzeugfesten oder modulseitigen Anschlag durchgeführt, wodurch diejenigen Toleranzen ausgeglichen sind, welche zur Einstellung der Nachstellung vorhanden waren. Wenn nun der Handbremshebel von seiner abgelegten Stellung (Öffnungsstellung) angehoben wird, erfolgt bis zur Verriegelung beziehungsweise bis zum Form- und Kraftschluß von Zahnstange und Sperrsegmenten des Gesperres ein Leerweg der Zahnstange beziehungsweise des Seilzuges von nicht mehr als 2 mm. Durch diese erfindungsgemäßen Maßnahmen ist somit eine einfache Montage sowie eine universelle Einsetzbarkeit der Vorrichtung gegeben, wobei einfach und präzise der kleinstmögliche Leerhub während der Montage eingestellt werden kann.

Nach einer ersten vorteilhaften Ausgestaltung der Erfindung ist der Gegenanschlag durch einen Ring gebildet, der die Hülse umfasst und im wesentlichen quer zur Längserstreckung der Hülse angeordnet ist beziehungsweise radial von dieser absteht. Durch diese Maßnahme wird ein breitflächiger, der Hülse zugeordneter, verstellbarer und feststellbarer Gegenanschlag bereitgestellt, der sich sicher an dem fahrzeugfesten oder modulseitigen Anschlag abstützen und demgemäß die Sperrsegmente in die Öffnungsstellung überführen kann, indem sich das stirnseitige Ende der Hülse oder Buchse dem oder den Sperrsegmenten anlegt und diese von der Verriegelungsstellung in die Öffnungsstellung überführt.

Von Vorteil besitzt der Ring eine mittige, kegelstumpfförmige Konusöffnung, in der die Hülse kraft- und/oder formschlüssig aufgenommen ist. Die freien endseitigen Wände der Konusöffnung können sich der Hülse oder Buchse fest anlegen oder sich sogar in die Außenwand der Hülse oder Buchse nach der entsprechenden Verstellung des Ringes an der Buchse einkrallen, so dass der Ring sicher in der jeweiligen Position an der Hülse oder Buchse festgestellt ist und nicht unbeabsichtigt in axialer Richtung entlang der Hülse oder Buchse verschoben oder verstellt werden kann.

Die Vorrichtung weist nach einer weiteren vorteilhaften Ausgestaltung der Erfindung das Merkmal auf, dass die Hülse am stirnseitigen Ende eine Umbörtelung besitzt, die auf das wenigstens eine Sperrsegment wirkt. Durch diese Umbörtelung wird eine flächige Anlage der Hülse oder Buchse an dem oder den Sperrsegmenten und damit einhergehend eine sichere Überführung des oder der Sperrsegmente von der Schließstellung in die Öffnungsstellung erreicht.

Damit sind nach einer vorteilhaften Ausgestaltung der Erfindung das oder die Sperrsegmente in einer Konuskammer der Hülse gleitend geführt und mittels einer Vorspannung, beispielsweise einer Druckfeder, in eine Sperrstellung bezüglich der Zahnstange beaufschlagbar. Hierdurch ist eine sichere Kopplung zwischen der Hülse und der Zahnstange bei aktiviertem Geber gewährleistet.

Es hat sich ebenfalls als vorteilhaft erwiesen, dass die Sperrsegmente Rastzähne besitzen, die in der Sperrstellung des Gesperres in eine Gegenzahnung der Zahnstange eingreifen, so dass eine unbeabsichtigte Überführung des Gesperres in die Öffnungsstellung bei einer Aktivierung des Gebers sicher vermieden ist.

Von Vorteil ist eine weitere Druckfeder zur Erzeugung eines selbsttätigen Längenausgleich vorgesehen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Ausführungsbeispiel der erfindungsgemäßen Vorrichtung vor der Ersteinstellung,
- Figur 2: den Einstellvorgang der Vorrichtung gemäß Figur 1, wobei zunächst die Hülse auf Block gegen das oder die Sperrsegmente mittels einer Hilfsvorrichtung bewegt wird, die Sperrsegmente außer Eingriff mit der Zahnstange gebracht werden und anschließend der Gegenanschlag auf der Hülse gegen den ortsbeziehungsweise fahrzeugfesten Anschlag bewegt wird,
- Figur 3: den Bremshebel im abgelegten Zustand mit eingestellter Vorrichtung,
- Figur 4: den Bremshebel im betätigten Zustand und
- Figur 5: ein Ausführungsbeispiel nach dem Stand der Technik gemäß der DE-A-196 18 422.

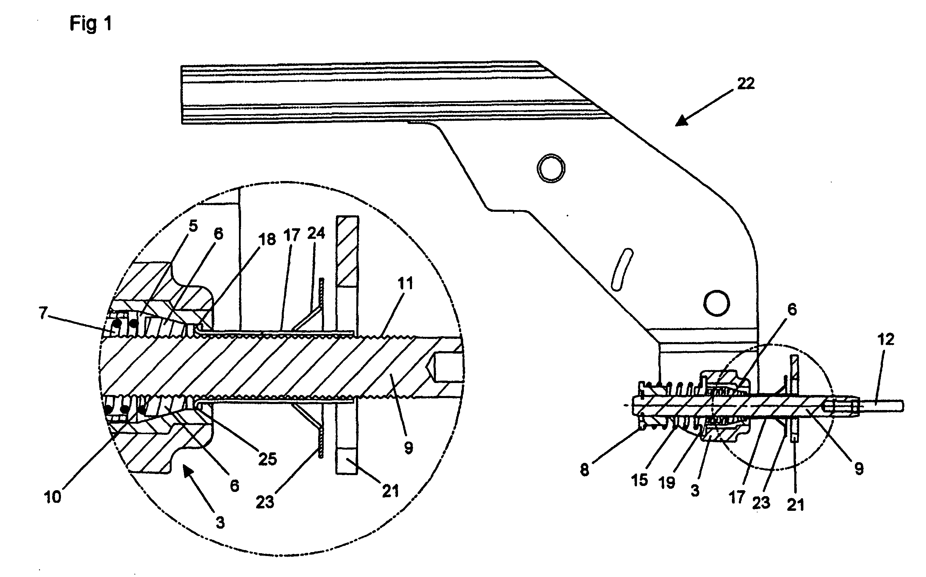

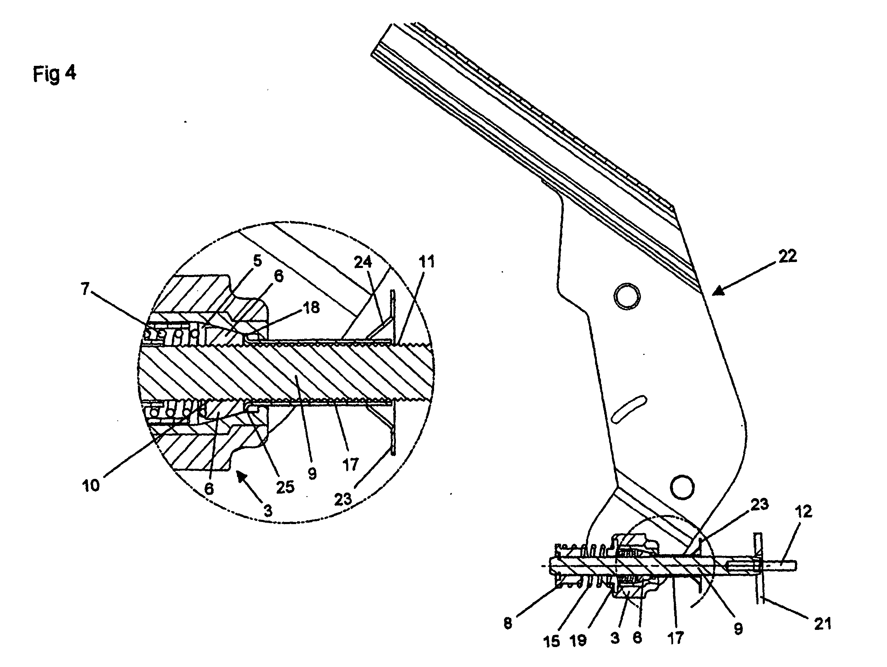

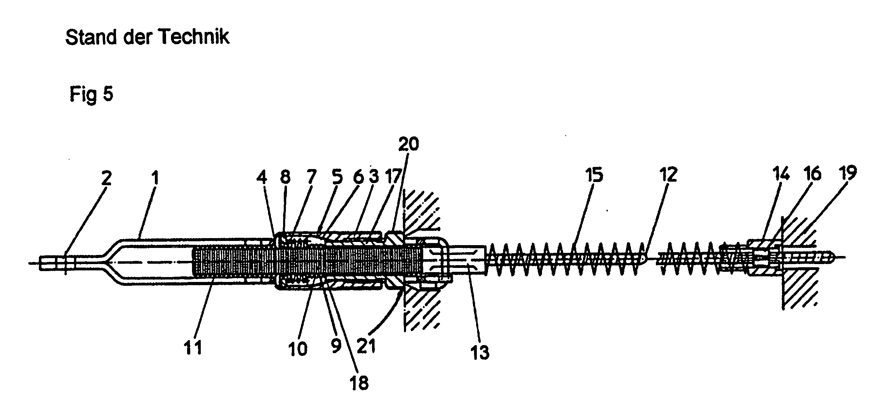

Die Beschreibung der Funktion der erfindungsgemäßen Vorrichtung basiert im wesentlichen auf der eingangs genannten Beschreibung des Ausführungsbeispiels nach dem Stand der Technik gemäß Figur 5, welche als Figur 4 Gegenstand der DE 196 18 422 ist. Dabei sind vergleichbare Funktionsteile gemäß Figur 5 und dem Ausführungsbeispiel der vorliegenden Erfindung gemäß den Figuren 1 bis 4 mit gleichen Bezugsziffern gekennzeichnet.

Die Vorrichtung zur selbsttätigen Längenkorrektur von Seilzügen 12, insbesondere zur Nachstellung von Bremsseilzügen oder dergleichen, weist eine Hülse 3 mit einer Aufnahme auf, in welcher eine Zahnstange 9 oder dergleichen verschiebbar geführt ist. An der Hülse 3 ist ein Hebel, beispielsweise ein Bremshebel 22 angelenkt, während die Zahnstange 9 über den Seilzug 12 mit einem Nehmer, beispielsweise einer Kraftfahrzeugbremse gekoppelt ist. Bei einer Aktivierung des Gebers sind die Hülse 3 und die Zahnstange 9 mittels eines Sperrsegmente 6 aufweisenden Gesperres koppelbar, während bei einer Deaktivierung des Gebers die bevorzugt mit einer Vorspannung beaufschlagte Zahnstange 9 zur Kompensation etwaiger im System vorhandener Lose bezüglich der Hülse 3 in Richtung einer Verkürzung oder Verlängerung der Vorrichtung verschiebbar ist.

Zwischen dem Gesperre und einem ortsfesten Anschlag 21 ist auf der Zahnstange 9 eine verschiebbare Hülse 17 geführt, welche bei einer Deaktivierung des Gebers, zum Beispiel des Bremshebels 22, das Gesperre in eine Öffnungsstellung überführt. Der Hülse 17 ist ein in Längserstreckung der Hülse 17 verstellbarer sowie feststellbarer Gegenanschlag, zum Beispiel ein Ring 23 zugeordnet, der auf der Hülse aufsitzt, und mit dem Anschlag 21 zusammenwirkt. Der Gegenanschlag ist durch den Ring 23 gebildet, der die Hülse 17 umfaßt und im wesentlichen quer zur Längserstreckung der Hülse 17 angeordnet ist. Der Ring 23 weist des weiteren eine mittige sich kegelstumpfförmig verjüngende Konusöffnung 24 auf, in der die Hülse kraft- und/oder formschlüssig aufgenommen ist. Der Ring 23 ist mittels der Konusöffnung 24 an der Hülse 17 bezüglich einer axialen Verstellung feststellbar.

Am stirnseitigen Ende 18 weist die Hülse 17 eine Umbörtelung 25 auf, die auf das wenigstens eine Sperrsegment 6 wirkt. Die Sperrsegmente 6 sind in einer Konuskammer oder dergleichen der Hülse 3 gleitend geführt und mittels einer Vorspannung, beispielsweise einer Druckfeder 7, in einer Sperrstellung bezüglich der Zahnstange 9 beaufschlagt. Die Sperrsegmente 6 besitzen Rastzähne 10, die in der Sperrstellung des Gesperres in eine Gegenzahnung 11 der Zahnstange 9 eingreifen.

An einem als Schulter 8 ausgebildeten Widerlager der Zahnstange 9 und einem gehäuseseitigen Anschlag 19 ist des weiteren die Druckfeder 15 gespannt.

Von Seiten der Automobilhersteller wird ein möglichst geringer Axialverstellweg gefordert, bis eine Verriegelung der Sperrsegmente 6 mit der Zahnstange 9, d. h. Form- und Kraftschluß zwischen Zahnstange 9 und Hülse 3 stattfindet. Hierfür ist nach der Erfindung die Hülse 17 mit dem Ring 23 vorgesehen, wobei die Hülse 17 mit der Umbörtelung 25 am stirnseitigen Ende 18 dem oder den Sperrsegmenten 6 anlegbar ist. Der Ring 23 auf der Hülse 17 ist in Axialrichtung der Hülse 17 verstellbar und festlegbar, so dass der Ring 23 oder dergleichen Gegenanschlag der Hülse 17 in einer bestimmten Stellung bezüglich des ortsfesten Anschlages 21 positionierbar ist.

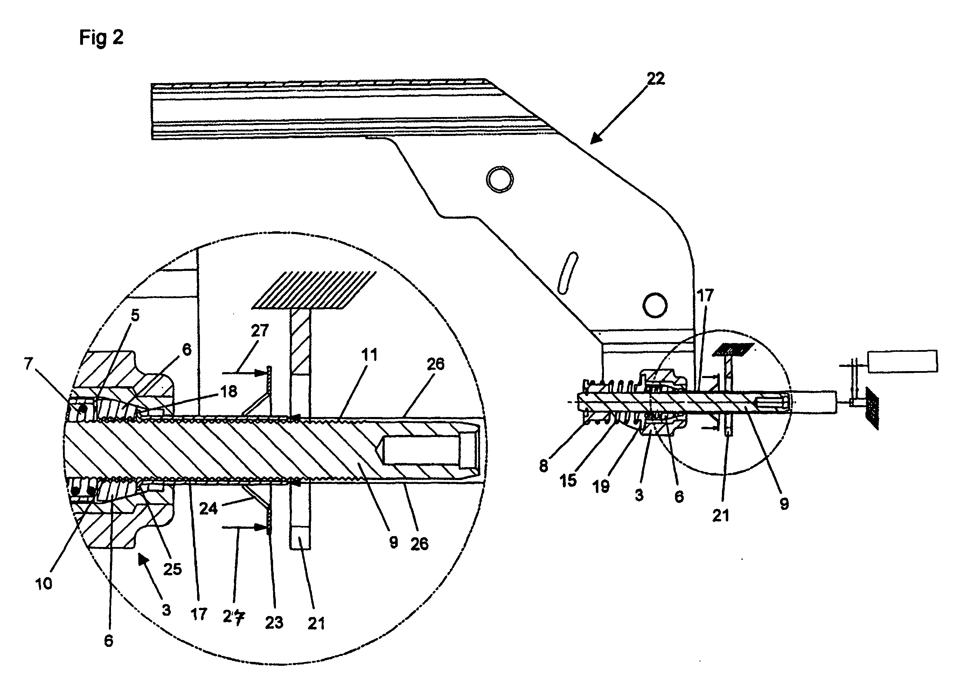

Bei der Vormontage des Handbremsmoduls befindet sich die Vorrichtung in der verriegelten Stellung, wobei die Sperrsegmente 6 in Eingriff mit der Zahnstange 9 stehen und sich an einer Konuskammer der Hülse 3 abstützen. In dieser Stellung wird die Hülse 17 mittels einer Linearverstelleinheit soweit verschoben, bis das stirnseitige Ende 18 mit der Umbörtelung 25 an den Sperrsegmenten 6 angrenzt. Anschließend erfolgt eine weitere definierte Axialverschiebung der Hülse 17 mittels der Linearverstelleinheit, was durch die Pfeile 26 in Figur 2, vergrößerter Ausschnitt, angedeutet ist. Diese weitere definierte Axialverschiebung beträgt beispielsweise ca. 2 mm. Insoweit ist dann ein Toleranzausgleich durchgeführt.

Des weiteren wird nachfolgend mit Hilfe in einer Anlagestellung an der Hülse 17 befindlichen Linearverstelleinheit der Ring 23 entlang der Hülse 17 hin zu dem ortsfesten Anschlag 21 verschoben, wie dies mit den Pfeilen 27 in Figur 2, vergrößerte Darstellung, angedeutet ist. Durch diese Maßnahme sind nun diejenigen Toleranzen ausgeglichen, welche zur Einstellung der Nachstellung zunächst vorhanden waren.

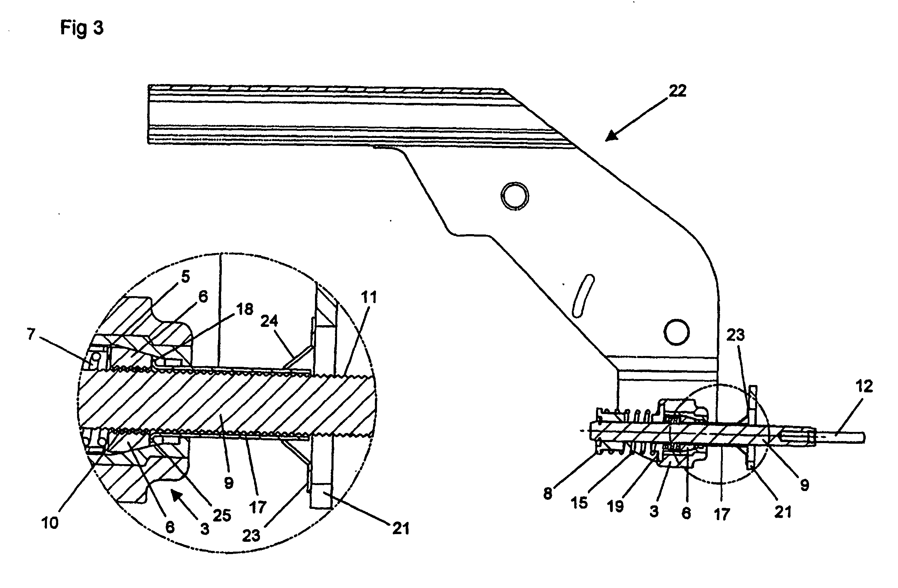

Wenn nun der Bremshebel 22 von seiner abgelegten Stellung gemäß Figur 3 angehoben wird, erfolgt bis zur Verriegelung beziehungsweise bis zur Form- beziehungsweise Kraftschlussbildung zwischen Zahnstange 9 und Sperrsegmenten 6 lediglich ein Leerweg von nicht mehr als 2 mm.

Für weitere Einzelheiten der Funktionsweise der erfindungsgemäßen Vorrichtung wird auch auf die Beschreibung der Ausführungsbeispiele der DE-A-196 18 422 verwiesen.

### Bezugszeichenliste

- 1 -: Bügel
- 2 -: Anlenkung
- 3 -: Hülse, Gehäuse
- 4 -: Aussparung
- 5 -: Konuskammer
- 6 -: Sperrsegmente
- 7 -: Druckfeder
- 8 -: Schulter
- 9 -: Zahnstange
- 10 -: Rastzahn (von 6)
- 11 -: Gegenzahnung (von 9)
- 12 -: Seilzug
- 13 -: Preßstück
- 14 -: Sperrstück
- 15 -: Druckfeder
- 16 -: Nippel
- 17 -: Hülse
- 18 -: stirnseitiges Ende
- 19 -: Anschlag
- 20 -: Rändelung
- 21 -: Anschlag
- 22 -: Bremshebel
- 23 -: Ring
- 24 -: Konusöffnung
- 25 -: Umbörtelung
- 26 -: Pfeil
- 27 -: Pfeil

## Patentansprüche

1. Vorrichtung zur selbsttätigen Längenkorrektur von Betätigungen, insbesondere von Seilzügen(12) zur Nachstellung von Bremsseilzügen oder dergleichen von Kraftfahrzeugen, mit einer eine Aufnahme oder dergleichen aufweisenden Hülse (3) und einer in der Aufnahme verschiebbar geführten Zahnstange (9), Raststange oder dergleichen, wobei die Hülse (3) eine Anlenkung (2) für einen Geber, zum Beispiel einen Hebel oder Bremshebel (22) aufweist und die Zahnstange (9) über einen Seilzug (12) mit einem Nehmer gekoppelt ist, und bei einer Aktivierung des Gebers die Hülse (3) und die Zahnstange (9) mittels eines Sperrsegmente (6) aufweisenden Gesperres koppelbar sind und bei einer Deaktivierung des Gebers die bevorzugt mit einer Vorspannung beaufschlagte Zahnstange (9) zur Kompensation etwaiger im System vorhandener Lose bezüglich der Hülse (3) in Richtung einer Verkürzung oder Verlängerung der Vorrichtung verschiebbar ist, wobei zwischen dem Gesperre und einem ortsfesten Anschlag (21) auf der Zahnstange (9) eine verschiebbare Hülse (17) geführt ist, welche bei einer Deaktivierung des Gebers das Gesperre in eine Öffnungsstellung überführt, **dadurch gekennzeichnet, dass** der verschiebbaren Hülse (17) ein in Längserstreckung der Hülse (17) verstellbarer sowie feststellbarer Gegenanschlag, zum Beispiel ein Ring (23) aufsitzt, der mit dem Anschlag (21) zusammenwirkt.

2. Vorrichtung nach Anspruch 1, **dadurch gekennzeichnet, dass** der Gegenanschlag durch einen Ring (23) gebildet ist, der die Hülse (17) umfasst und im wesentlichen quer zur Längserstreckung der Hülse (17) angeordnet ist.

3. Vorrichtung nach Anspruch 1 oder 2, **dadurch gekennzeichnet, dass** der Ring (23) eine mittige, kegelstumpfförmige Konusöffnung (24) besitzt, in der die Hülse (17) kraft- und/oder formschlüssig aufgenommen ist.

4. Vorrichtung nach einem der vorhergehenden Ansprüche, **dadurch gekennzeichnet, dass** der Ring (23) mittels der Konusöffnung (24) an der Hülse (17) bezüglich axialer Verstellung verstellbar ist.

5. Vorrichtung nach einem der vorhergehenden Ansprüche, **dadurch gekennzeichnet, dass** die Hülse (17) am stirnseitigen Ende (18) eine Umbörtelung (25) besitzt, die auf das wenigstens eine Sperrsegment (6) wirkt.

6. Vorrichtung nach einem der vorhergehenden Ansprüche, **dadurch gekennzeichnet, dass** die Sperrsegmente (6) in einer Konuskammer (5) der Hülse (3) gleitend geführt und mittels einer Vorspannung, beispielsweise einer Druckfeder (7), in eine Sperrstellung bezüglich der Zahnstange (9) beaufschlagbar sind.

7. Vorrichtung nach einem der vorhergehenden Ansprüche, **dadurch gekennzeichnet, dass** die Sperrsegmente (6) Rastzähne (10) aufweisen, die in der Sperrstellung des Gesperres in eine Gegenzahnung (11) der Zahnstange (9) eingreifen.

8. Vorrichtung nach einem der vorhergehenden Ansprüche, **dadurch gekennzeichnet, dass** zwischen der Zahnstange (9) und einem weiteren Anschlag (19) eine Druckfeder (15) eingespannt ist.

## Claims

1. Device for automatic length correction of actuating means, particularly of cable pulls (12), for resetting brake cable pulls or the like of motor vehicles, with a sleeve (3) having a receiver or the like and a rack (9), detent rod or the like guided in the receiver to be displaceable, wherein the sleeve (3) has an articulation (2) for a transmitter, for example a lever or brake lever (22), and the rack (9) is coupled with a receiving means by way of a cable pull (12), and in the case of activation of the transmitter the sleeve (3) and the rack (9) are coupled by way of a locking means having locking segments (6) and in the case of deactivation of the transmitter the rack (9), which is preferably loaded with a bias, is displaceable in the direction of shortening or elongation of the device for compensation for slack, which is possibly present in the system, with respect to the sleeve (3), wherein a displaceable sleeve (17), which in the case of deactivation of the transmitter transfers the locking means to an open setting, is guided between the locking means and a stationary abutment (21) on the rack (9), **characterised in that** the displaceable sleeve (17) is seated on a counter-abutment, for example a ring (23), which is adjustable as well as fixable in length direction of the sleeve (17) and which co-operates with the abutment (21).

2. Device according to claim 1, **characterised in that** the counter-abutment is formed by a ring (23) which surrounds the sleeve (17) and is arranged substantially transversely to the length direction of the sleeve (17).

3. Device according to claim 1 or 2, **characterised in that** the ring (23) has a central, frusto-conical cone opening (24) in which the sleeve (17) is received in force-locking and/or shape-locking manner.

4. Device according to one of the preceding claims, **characterised in that** the ring (23) is adjustable by means of the cone opening (24) at the sleeve (17) with respect to axial adjustment.

5. Device according to one of the preceding claims, **characterised in that** the sleeve (17) has at the front end (18) a beading (25) which acts on the at least one locking segment (6).

6. Device according to one of the preceding claims, **characterised in that** the locking segments (6) are slidingly guided in a cone chamber (5) of the sleeve (3) and are loadable by means of a bias, for example a compression spring (7), into a locking setting with respect to the rack (9).

7. Device according to one of the preceding claims, **characterised in that** the locking segments (6) have detent teeth (10) which in the locking setting of the locking means engage in a counter-toothing (11) of the rack (9).

8. Device according to one of the preceding claims, **characterised in that** a compression spring (15) is stressed between the rack (9) and a further abutment (19).

## Revendications

1. Dispositif pour compenser automatiquement la longueur de commandes, en particulier de câbles de transmission (12), pour l'ajustage de câble de transmission de frein ou analogues dans les véhicules automobiles, avec un manchon (3) comportant un logement ou analogue et une crémaillère (9), une tige à crans ou analogue, guidée de manière mobile dans le logement, dans lequel le manchon (3) comporte une articulation (2) pour un transmetteur, par exemple un levier ou un levier de frein (22), et la crémaillère (9) est couplée à un récepteur au moyen d'un câble de transmission (12), et en cas d'activation du transmetteur, le manchon (3) et la crémaillère (9) peuvent être couplés à l'aide d'un segment de blocage (6) appartenant à un dispositif de blocage et en cas de désactivation du transmetteur, la crémaillère (9), de préférence mise sous précontrainte, est déplaçable par rapport au manchon (3) dans le sens d'un raccourcissement ou d'un allongement du dispositif pour compenser les mous éventuellement présents dans le système, dans lequel un manchon mobile (17), qui, en cas de désactivation du transmetteur, transfère le dispositif de blocage dans une position d'ouverture, est guidé sur la crémaillère (9) entre le dispositif de blocage et une butée fixe (21), **caractérisé en ce que** le manchon mobile (17) est posé sur une contre-butée, par exemple une bague (23), qui peut être déplacée et fixée suivant la direction longitudinale du manchon (17) et qui coopère avec la butée (21).

2. Dispositif selon la revendication 1, **caractérisé en ce que** la contre-butée est formée par une bague (23) qui entoure le manchon (17) et qui est montée sensiblement perpendiculairement à la direction longitudinale du manchon (17).

3. Dispositif selon la revendication 1 ou 2, **caractérisé en ce que** la bague (23) présente une ouverture centrale conique (24) en forme de tronc de cône, dans laquelle le manchon (17) est logé en force et/ou par complémentarité de formes.

4. Dispositif selon l'une quelconque des revendications précédentes, **caractérisé en ce que** la bague (23) est déplaçable, pour ce qui concerne un déplacement axial, sur le manchon (17) à l'aide de l'ouverture conique (24).

5. Dispositif selon l'une quelconque des revendications précédentes, **caractérisé en ce que** le manchon (17) comporte à une extrémité frontale (18) un bord rabattu (25) qui agit sur le au moins un segment de blocage (6).

6. Dispositif selon l'une quelconque des revendications précédentes, **caractérisé en ce que** les segments de blocage (6) sont guidés de manière coulissante dans une chambre conique (5) du manchon (3) et peuvent être placés dans une position de blocage par rapport à la crémaillère (9) à l'aide d'un élément de précontrainte, par exemple d'un ressort de compression (7).

7. Dispositif selon l'une quelconque des revendications précédentes, **caractérisé en ce que** les segments de blocage (6) comportent des dents à crans (10) qui, dans la position de blocage du dispositif de blocage, s'engrènent dans une denture antagoniste (11) de la crémaillère (9).

8. Dispositif selon l'une quelconque des revendications précédentes, **caractérisé en ce qu'**un ressort de compression (15) est tendu entre la crémaillère (9) et une autre butée (19).
